# EUROPEAN PATENT APPLICATION

(11) **EP 4 811 454 A1**
(43) Date of publication of application: **23.09.2026**
(21) Application number: 25886370.3
(22) Date of filing: 16.07.2025
(51) Int. Cl.: H01M 4/525, H01M 4/505, H01M 4/131, H01M 10/054, C01G 53/50, H01M 4/02

(54) **CATHODE ACTIVE MATERIAL FOR SODIUM SECONDARY BATTERY, PREPARATION METHOD THEREFOR, AND SODIUM SECONDARY BATTERY COMPRISING SAME**

(30) Priority: 31.10.2024 KR 20240153044
(71) Applicant: EcoPro BM Co., Ltd, Cheongju-si, Chungcheongbuk-do 28116 (KR)
(72) Inventor: PARK, A Ram, Cheongju-si, Chungcheongbuk-do 28116 (KR); JUNG, Kuhyun, Cheongju-si, Chungcheongbuk-do 28116 (KR); HEO, Seungwoo, Cheongju-si, Chungcheongbuk-do 28116 (KR); LEE, Dongwook, Cheongju-si, Chungcheongbuk-do 28116 (KR)
(74) Representative: Beck & Rössig European Patent Attorneys
(86) International application number: PCT/KR2025/010480
(87) International publication number: WO 2026/095262

(57) **Abstract**

One embodiment of the present invention provides a positive electrode active material for a sodium secondary battery, comprising a single-crystal sodium composite transition metal oxide including at least sodium; two or more principal elements selected from transition metals; and two or more doping elements selected from transition metals, and satisfying Relation Formula 1 representing uniformity of the doping elements.

## Description

### [Technical Field]

The present invention relates to a positive electrode active material for a sodium secondary battery, a method of preparing the same, and a sodium secondary battery including the same.

### [Background Art]

Secondary batteries have been widely used as energy storage devices in various electronic technology fields. Recently, as the demand for lithium-ion secondary batteries has rapidly increased, sodium-ion secondary batteries have attracted significant attention as alternatives to lithium, which is an expensive metal.

Sodium-ion secondary batteries are one of the next-generation battery systems having high potential for commercialization because they operate based on an intercalation/deintercalation mechanism similar to that of lithium-ion secondary batteries. However, sodium-ion secondary batteries generally exhibit lower capacity, lifespan characteristics, and rate capability than lithium-ion secondary batteries, making commercialization difficult. Accordingly, the development of high-performance positive electrode active materials is essential for commercialization of sodium-ion secondary batteries.

Layered transition metal oxides having a simple crystal structure, excellent electrochemical properties, and facile synthesis are commonly used as positive electrode active materials for sodium-ion secondary batteries. Such layered transition metal oxides are generally classified into O3-type and P2-type structures depending on their crystal structures. O3-type positive electrode active materials generally have a composition represented by Naₓ(TM)O₂ (2/3 < x ≤ 1), whereas P2-type positive electrode active materials generally have a composition represented by Naₓ(TM)O₂ (x ≤ 2/3).

P2-type layered oxides exhibit relatively excellent cycle stability. However, commercial application thereof is limited because of relatively poor capacity characteristics resulting from a low sodium content. O3-type layered oxides exhibit higher energy density than P2-type layered oxide particles. However, O3-type layered oxides undergo greater structural changes during charge and discharge, resulting in inferior cycle stability. In addition, O3-type layered oxides generally exhibit poor air stability and water stability. During storage and processing, the materials react with ambient moisture (H₂O) and carbon dioxide (CO₂), thereby forming sodium-containing by-products such as Na₂CO₃ and NaOH on particle surfaces and causing structural degradation.

As one approach for improving the performance of positive electrode active materials, various doping methods utilizing monovalent and multi-valent cations as dopant elements have been extensively studied. By introducing dopant elements into the crystal lattice of the positive electrode active material, physical and electrochemical properties of the active material may be improved depending on the inherent characteristics of the dopant elements, such as bonding energy and oxidation state.

The dopant elements may be selected from various elements and optimized according to desired effects. However, doping efficiency may vary depending on intrinsic and extrinsic factors including dopant size, diffusivity, and preparation conditions of the positive electrode active material. Therefore, multi-element doping utilizing a combination of multiple dopant elements may provide greater advantages than single-element substitution doping for improving properties of positive electrode active materials. Specifically, multi-element doping may selectively and synergistically provide various beneficial effects including improved structural stability, thermal stability, cation-mixing suppression, and capacity enhancement.

Nevertheless, even in multi-element doping systems, not only the effects provided by the dopant elements themselves but also the characteristics of sodium and transition metal elements constituting the positive electrode active material and the interactions among dopant elements should be carefully considered. If multiple dopant elements are introduced without appropriately considering such factors, doping efficiency may decrease and, in some cases, the overall properties of the positive electrode active material may deteriorate. Accordingly, there remains a need for technologies capable of optimizing the composition and content of dopant elements to more effectively improve the performance of positive electrode active materials.

### [Prior Art Documents]

### [Patent Documents]

(Patent Document 1: Chinese Patent No. CN 117457895 B)
(Patent Document 2: Chinese Patent Publication No. CN 117012948 A)

### [Disclosure of Invention]

### [Technical Problem]

An object of the present invention is to provide a single-crystal positive electrode active material having improved cycle-life characteristics by achieving uniform distribution of dual dopant elements within positive electrode active material particles and promoting efficient single-crystal formation through the use of the dopant elements, thereby preventing particle fracture during electrode calendaring.

### [Technical Solution]

One embodiment of the present invention provides a positive electrode active material for a sodium secondary battery, comprising: a single-crystal sodium composite transition metal oxide including: at least sodium; two or more principal elements selected from transition metals; and two or more dopant elements selected from transition metals, wherein the positive electrode active material satisfies the following Relation Formula 1 representing compositional uniformity of a first dopant element:
$B / A \leq 0.15$
(wherein, in Relation Formula 1, A and B are measured at at least thirty arbitrary points on a cross-section passing through a center portion of the positive electrode active material, and are an average value (A) and a standard deviation (B), respectively, of a content (wt%) of the first doping element based on total metals excluding sodium)

In one embodiment, the positive electrode active material may further satisfy the following Relation Formula 2 representing distribution uniformity of the first dopant element among a plurality of single-crystal sodium composite transition metal oxide particles:
$D / C \leq 0.10$
(wherein, in Relation Formula 2, C and D are measured among at least ten arbitrarily selected single-crystal particles, and are an average value (C) and a standard deviation (D), respectively, of a content (wt%) of the first doping element based on total metals excluding sodium)

The positive electrode active material may contain less than 3 wt% of an oxide of the first dopant element.

The single-crystal sodium composite transition metal oxide has an O3-type crystal structure, wherein the transition metals comprise Ni; Mn; and at least one selected from Fe and Co; and wherein, among the two or more doping elements selected from transition metals, the first doping metal is Cu and the second doping metal is Zn or Zr.
the sodium composite transition metal oxide may comprise a compound represented by the following Chemical Formula 1:

   [Chemical Formula 1] Naₐ[(NiₓMn_{y}Fe_{z}Cu_{b}M1_{c})]O₂
(wherein, in Chemical Formula 1, M1 is Zn or Zr, 0.8<a<1.2, 0.1≤x≤0.9, 0.1≤y≤0.9, 0.1≤z≤0.9, 0.05≤b≤0.13, 0.005≤c≤0.02, and x+y+z+b+c=1)
the sodium composite transition metal oxide may comprise a compound represented by the following Chemical Formula 2:

   [Chemical Formula 2] Naₐ[(NiₓMn_{y}Fe_{z}Cu_{b}M1_{c})]O₂
(wherein, in Chemical Formula 2, M1 is Zn, 0.9<a<1.1, 0.16≤x≤0.26, 0.27≤y≤0.37, 0.27≤z≤0.37, 0.05≤b≤0.13, 0.005≤c≤0.02, 0.27≤x+b≤0.37, and x+y+z+b+c=1)

The sodium composite transition metal oxide may be characterized in that a ratio of a content of the first doping element to a content of the second doping element is from 10 to 25 on a molar basis.

Another one embodiment of the present invention provides a method of preparing a positive electrode active material for a sodium secondary battery, comprising: a precursor preparation step of preparing a precursor comprising a first doping element and at least two transition metals; and a positive electrode active material preparation step of mixing the precursor and a sodium compound and heat-treating the mixture to uniformly dope a surface and an interior of positive electrode active material particles with the first doping element, wherein the precursor preparation step or the positive electrode active material preparation step further comprises mixing a compound of a second doping element.

The precursor preparation step may comprise mixing at least two transition metal compounds and a compound of the first doping element, and then preparing a transition metal hydroxide precursor through a co-precipitation reaction.

The precursor preparation step may comprise mixing a transition metal hydroxide precursor and a compound of the first doping element, and then heat-treating the mixture to coat at least a portion of a surface of the transition metal hydroxide precursor with the first doping element.

Another one embodiment of the present invention provides A positive electrode for a sodium secondary battery, comprising the positive electrode active material.

Another one embodiment of the present invention provides a sodium secondary battery comprising the positive electrode.

### [Advantageous Effects]

According to the present invention, a single-crystal sodium composite transition metal oxide including at least sodium, two or more principal transition metal elements, and two or more dopant elements is provided. As a result, the compositional uniformity of the first dopant element may be significantly improved, single-crystal formation efficiency by the second dopant element may be enhanced, and a uniform particle size distribution of single-crystal particles may be achieved. Accordingly, particle fracture during electrode calendaring may be suppressed, and cycle-life characteristics of sodium secondary batteries may be significantly improved.

### [Brief Description of Drawings]

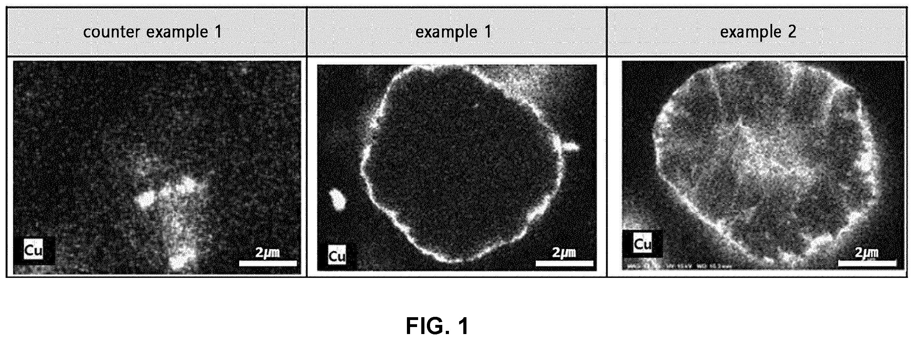

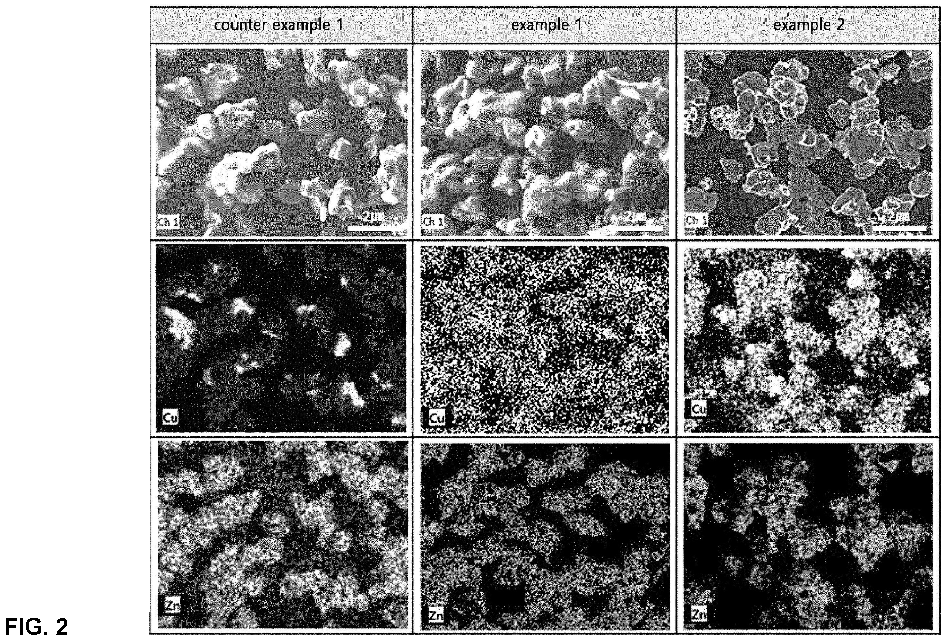

FIGS. 1 and 2 are a cross-sectional SEM-EDS (Scanning Electron Microscope-Energy Dispersive X-ray Spectroscopy) Cu analysis image (FIG. 1) of the prepared transition metal hydroxide precursor of Comparative Example 1 and Examples 1 to 2, and a cross-sectional SEM-EDS Cu and Zn analysis image (FIG. 2) of the prepared positive electrode active material particles.

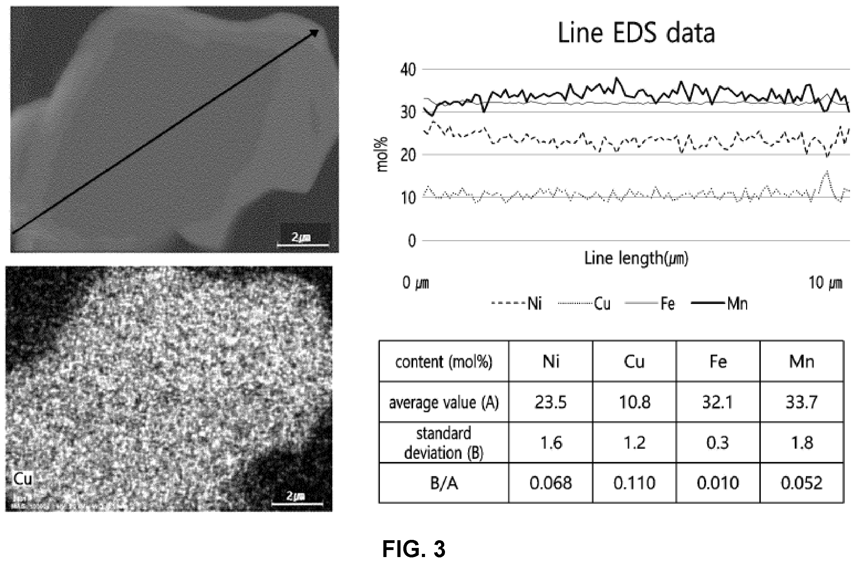

FIG. 3 shows analysis results of an average value (A) and a standard deviation (B) of the content (atomic mol%) of total metals excluding sodium, measured at at least thirty arbitrary points on a cross-section passing through a center portion of the positive electrode active material prepared according to Example 1 using SEM-EDS line-mapping analysis.

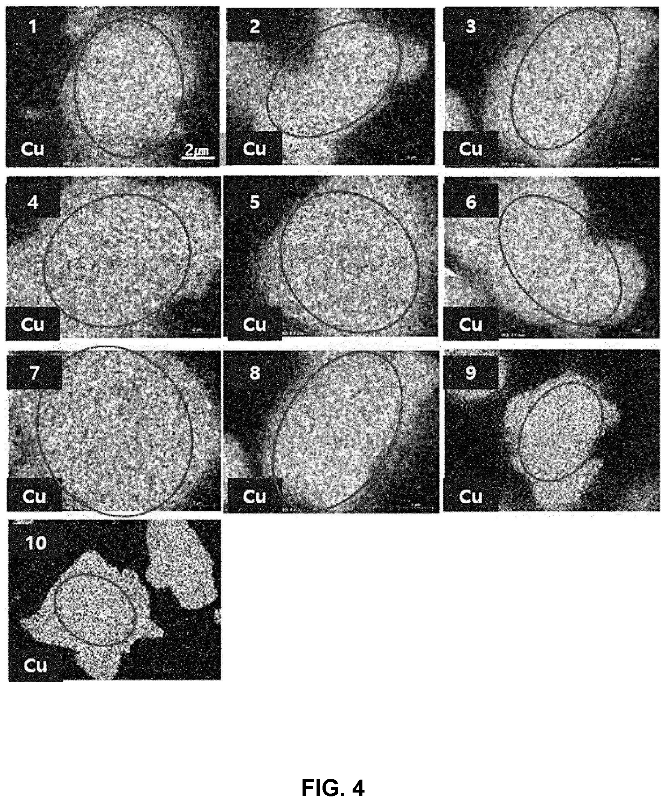

FIG. 4 shows cross-sectional SEM-EDS analysis results of ten arbitrarily selected single-crystal particles of the positive electrode active material prepared according to Example 1.

### [Mode for Carrying Out the Invention]

The advantages and features of the present invention, and methods for achieving the same, will become apparent with reference to the embodiments described below in detail in conjunction with the accompanying drawings. However, the present invention is not limited to the embodiments disclosed hereinafter and may be embodied in various different forms. Rather, these embodiments are provided so that this disclosure will be thorough and complete, and will fully convey the scope of the invention to those skilled in the art. The present invention is defined only by the scope of the appended claims.

Unless otherwise defined, all terms (including technical and scientific terms) used herein have the meanings commonly understood by those skilled in the art to which the present invention pertains. Throughout the specification, when a component is referred to as "including" another component, it means that the component may further include other components unless specifically stated otherwise. In addition, singular forms include plural forms unless the context clearly indicates otherwise.

In the present specification, singular forms include plural forms unless the context clearly indicates otherwise.

Further, when a layer, film, region, plate, or the like is referred to as being "on" or "over" another element, it includes not only the case where it is directly on the other element but also the case where another element is interposed therebetween.

As used herein, the expression "A to B" means "A or more and B or less" unless otherwise specifically defined. In addition, the expression "A and/or B" means at least one selected from the group consisting of A and B unless otherwise specifically defined.

One embodiment of the present invention provides a positive electrode active material for a sodium secondary battery, comprising a single-crystal sodium composite transition metal oxide including at least sodium; two or more principal elements selected from transition metals; and two or more doping elements selected from transition metals.

The sodium composite transition metal oxide of the present invention has an effect of improving crystal structure stability and preventing particle fracture and structural collapse of active material particles during electrode rolling by uniformly distributing a first doping element within the crystal lattice. In addition, a compound containing a second doping element is used as a flux, which is a material capable of lowering the melting point during calcination of the sodium composite transition metal oxide, thereby enabling uniform growth of the positive electrode active material into a single-crystal morphology while simultaneously substituting the second doping element into the crystal lattice to provide a dual-doping effect.

The present invention provides a positive electrode active material for a sodium secondary battery satisfying the following Relation Formula 1 representing compositional uniformity of a first doping element among the two or more doping elements.$B / A \leq 0.15$

In Relation Formula 1, A and B are measured at at least thirty arbitrary points on a cross-section passing through the center portion of the positive electrode active material, and represent an average value (A) and a standard deviation (B), respectively, of the content (wt%) of the first doping element based on the total metals excluding sodium.

Specifically, A and B in Relation Formula 1 may be an average value (A) and a standard deviation (B), respectively, of the content (wt%) of the first doping element based on the total metals excluding sodium at at least thirty arbitrary points selected from a linear profile of the first doping element on a cross-section passing through the center portion of the positive electrode active material.

Further, B/A is a parameter representing the distribution uniformity of the first doping metal within the crystal lattice of the single-crystal sodium composite transition metal oxide. For example, B/A may be 0.15 or less, 0.145 or less, 0.14 or less, 0.135 or less, or 0.13 or less, and may be 0.05 or more or 0.10 or more without limitation. According to the present invention, when the first doping metal is co-precipitated together with the principal elements and the second doping metal, a problem in which the first doping metal partially agglomerates within the crystal lattice, thereby reducing crystal structure stability and air/water stability and causing fracture of the single-crystal active material during electrode rolling, may be alleviated.

Meanwhile, the content of the first doping element and the linear profile analysis thereof may be experimentally performed using Energy Dispersive X-ray Spectroscopy (EDS) equipped in a transmission electron microscope or a scanning electron microscope.

One embodiment provides a positive electrode active material satisfying the following Relation Formula 2 representing distribution uniformity of the first doping element among a plurality of single-crystal sodium composite transition metal oxide particles.$D / C \leq 0.1$

In Relation Formula 2, C and D are measured among at least ten arbitrarily selected single-crystal particles, and represent an average value (C) and a standard deviation (D), respectively, of the content (wt%) of the first doping element based on the total metals excluding sodium.

Specifically, the plurality of single-crystal particles may include at least ten particles, for example, 10 to 300 particles, 10 to 200 particles, or 10 to 100 particles selected arbitrarily. D/C represents the distribution uniformity of the first doping element among the single-crystal particles in the overall positive electrode active material and is calculated as the ratio of the standard deviation (D) to the average value (C) of the content (wt%) of the first doping element among the single-crystal particles. For example, D/C may be 0.1 or less, 0.09 or less, 0.08 or less, or 0.07 or less, and may be 0.01 or more or 0.05 or more without limitation.

When D/C of the positive electrode active material falls within the above range, the first doping element may be uniformly distributed among the plurality of single-crystal particles, thereby providing more uniform mechanical properties and electrochemical properties of the positive electrode active material including the plurality of single-crystal particles.

In one embodiment, the positive electrode active material may include less than 3 wt% of an oxide of the first doping element. Specifically, when the first doping element is non-uniformly distributed and partially agglomerated in the positive electrode active material, it is likely to be synthesized as an oxide side-reaction phase. As a result, the effect of forming large-particle single crystals may be deteriorated, structural stability may decrease, and cycle-life characteristics may deteriorate. For example, the positive electrode active material may include the oxide of the first doping element in an amount of 2.9 wt% or less, 2.7 wt% or less, or 2.5 wt% or less, and may include the oxide in an amount of 0.5 wt% or more or 1 wt% or more.

In one embodiment, the sodium composite transition metal oxide has a single-crystal morphology. As used herein, the term "single-crystal morphology" refers to a single-crystal particle or an aggregate of 1 to 10, 1 to 5, 1 to 3, or 1 to 2 single crystals, and it will be readily understood that a small amount of polycrystalline particles may also be present.

By having a single-crystal morphology, the sodium composite transition metal oxide exhibits superior crystal structure stability compared with a positive electrode active material having a secondary-particle structure formed by aggregation of primary particles. Accordingly, particle fracture during the electrode rolling process may be prevented and a high electrode density may be achieved.

In one embodiment, the sodium composite transition metal oxide single crystal may have an O3-type crystal structure. Specifically, the principal transition metal elements may include Ni, Mn, and at least one selected from Fe and Co. Among the two or more doping elements selected from transition metals, the first doping metal may be Cu, and the second doping metal may be Zn or Zr.

According to the composition of the sodium composite transition metal oxide, an optimized composition in a multi-component transition metal system may be achieved by substituting Cu and Zn (or Zr), which are dual doping elements, into a transition metal system based on Ni, Fe (or Co), and Mn as principal elements. Through such a multi-component transition metal composition, a positive electrode active material having structural stability, high capacity, and excellent cycle-life characteristics may be synthesized.

Specifically, the sodium composite transition metal oxide may include a compound represented by the following Chemical Formula 1.

[Chemical Formula 1] Naₐ[(NiₓMn_{y}Fe_{z}Cu_{b}M1_{c})]O₂

wherein M1 is Zn or Zr, 0.8<a<1.2, 0.1≤x≤0.9, 0.1≤y≤0.9, 0.1≤z≤0.9, 0.05≤b≤0.13, 0.005≤c≤0.02, and x+y+z+b+c=1.

More specifically, the sodium composite transition metal oxide may include a compound represented by the following Chemical Formula 2.

[Chemical Formula 2] Naₐ[(NiₓMn_{y}Fe_{z}Cu_{b}M1_{c})]O₂

wherein M1 is Zn, 0.9<a<1.1, 0.16≤x≤0.26, 0.27≤y≤0.37, 0.27≤z≤0.37, 0.08≤b≤0.13, 0.005≤c≤0.02, 0.27≤x+b≤0.37, and x+y+z+b+c=1.

The molar ratio of sodium (Na) to the total metals (M) excluding sodium, Na/M, may be greater than 0.8 and less than 1.2, such that the composite particles may be formed in an O3 crystal structure. In Chemical Formula 1, when the content corresponding to "a" is 0.8 or less, capacity may decrease. When the content corresponding to "a" is 1.2 or greater, the material may become more sensitive to air and moisture stability and to synthesis conditions (such as temperature and atmosphere), and structural stability and moisture stability may deteriorate.

Specifically, the sodium composite transition metal oxide may have an O3 crystal structure as confirmed by X-ray diffraction (XRD), and the full width at half maximum (FWHM) of the (003) peak located at a diffraction angle of 2θ=15° to 17.5° may be 0.1699° to 0.2599°. A lower FWHM(003) value indicates higher O3 crystallinity, and structural stability is enhanced after Cu and Zn (or Zr) dual doping, thereby improving electrochemical performance.

The transition metals in the composite particle may be included in amounts of 0.1 to 0.9 mole each of Ni, Fe, and Mn based on 1 mole of the sodium composite transition metal oxide. For example, Ni may be included in a molar ratio of 0.16≤x≤0.26, 0.18≤x≤0.24, or 0.20≤x≤0.24, and Fe and Mn may each be included in a molar ratio of 0.27≤y, z≤0.37, 0.30≤y, z≤0.35, or 0.31≤y, z≤0.35.

The first and second doping elements in the composite particle may be included, based on 1 mole of the sodium composite transition metal oxide, such that Cu is included in a molar ratio of 0.05≤b≤0.13, 0.07≤b≤0.13, or 0.07≤b≤0.11. Further, Zn (or Zr) may be included in a molar ratio of 0.005≤c≤0.02, 0.005≤c≤0.015, or 0.005≤c≤0.01.

As the doping amount of the first doping element (Cu) increases, the degree of large-particle single crystallization tends to increase. However, an increase in the Cu content is undesirable because the uniformity of Cu distribution decreases, side reaction phases such as CuO are formed, and the capacity decreases due to substitution of Ni. Accordingly, the Cu doping amount is preferably within the above-described numerical range. Further, since substantially the same degree of single crystallization is exhibited regardless of the Zn doping amount within a range of 0.5 to 2 mol%, the Zn doping amount is preferably 0.5 to 1 mol% in terms of capacity characteristics.

Further, the ratio (Cu/Zn) of the doping amount (content) of the first doping element to the doping amount (content) of the second doping element may be 10 to 25, 12 to 25, or 14 to 22. When the Cu/Zn doping ratio (content ratio) exceeds the above design range, the uniformity of Cu distribution may decrease and formation of side reaction phases such as CuO may increase. Conversely, when the Cu/Zn doping ratio is below the above design range, the efficiency of large-particle single crystallization may decrease.

Another embodiment of the present invention provides a method of preparing a positive electrode active material for a sodium secondary battery.

The preparation method includes: a precursor preparation step including a first doping element and at least two transition metals; and a positive electrode active material preparation step of mixing the precursor and a sodium compound and heat-treating the mixture to uniformly dope the surface and interior of positive electrode active material particles with the first doping element, wherein the precursor preparation step or the positive electrode active material preparation step further includes mixing a compound of a second doping element.

In the present invention, by performing a specific process for dual doping with the first doping element (Cu) and the second doping element (Zn or Zr), it is possible to improve the structural stability of the prepared single-crystal positive electrode active material, improve particle strength through improved mechanical properties, and provide an O3-type positive electrode active material having excellent cycle-life characteristics. In addition, by simultaneously coprecipitating the first doping element in the center and on the surface of the precursor, or coating the surface of the precursor in a step separate from sodiation, the first doping element, which otherwise exhibits a non-uniform distribution due to agglomeration during dual doping, may be uniformly diffused into the crystal structure of the sodium composite transition metal oxide particles. On the other hand, it may be undesirable to mix compounds of the first and second doping elements together during the doping process or during co-precipitation of the multi-component transition metal hydroxide precursor without first performing the co-precipitation or coating process of the first doping element, to use only one of the first and second doping elements, or, conversely, to mix a compound of the second doping element in the coating process and perform a first heat treatment and then mix a compound of the second doping element again in the doping process and perform a second heat treatment, because doping uniformity may decrease or single crystallization may not proceed.

In one embodiment, the precursor preparation step may include preparing a transition metal hydroxide precursor through a co-precipitation reaction after mixing compounds of at least two transition metals and a compound of the first doping element.

Specifically, the precursor preparation step may include preparing a transition metal hydroxide precursor through a co-precipitation reaction after mixing compounds of at least two transition metals and a compound of the first doping element.

Alternatively, the precursor preparation step may include mixing a transition metal hydroxide precursor and a compound of the first doping element and heat-treating the mixture to coat at least a portion of the surface of the transition metal hydroxide precursor with the first doping element.

The mixing may include mixing the compound of the first doping element (copper) with the at least two transition metal compounds or the composite transition metal hydroxide in an amount such that the first doping element is present in an amount of 5 to 13 mol% based on 100 mol% of the total metals, for example, 7 to 13 mol% or 7 to 11 mol%. When the amount of the first doping element compound is less than the lower limit, improvement in structural stability and cycle-life characteristics resulting from introduction of the first doping element may be insufficient. Conversely, when the amount exceeds the upper limit, physical agglomeration of the first doping element may occur, making uniform coating difficult and resulting in formation of impurity phases.

The heat treatment may be performed at a temperature of 500 to 700°C for 4 to 8 hours. When the heat-treatment temperature and time are within the above ranges, the first doping element may be uniformly coated over the entire surface of the precursor particles, and the reactivity between the transition metal and the first doping element may be increased. In addition, the size of the primary precursor particles may be increased, the pore ratio within the secondary particles and the specific surface area of the primary particles may be reduced, and a highly crystalline precursor may be synthesized.

Specifically, the heat treatment may be performed at a temperature of 500 to 700°C, 550 to 650°C, or 550 to 600°C for 4 to 8 hours, 4.5 to 7.5 hours, or 5 to 7 hours, thereby further improving the above-described effects.

Also, the first doping element compound may be an acetate compound, sulfate, nitrate, phosphate, oxide, oxyhydroxide, hydroxide, or a combination thereof of the first doping element. The first doping element may be copper (Cu).

Further, the composite transition metal hydroxide precursor may include at least nickel, manganese, and M1 (Co and/or Fe), and may include a compound represented by the following Chemical Formula 3.

[Chemical Formula 3] [(NiₓMn_{y}M1_{z})](OH)₂

In Chemical Formula 3, M1 is Co or Fe, 0.1≤x≤0.9, 0.1≤y≤0.9, 0.1≤z≤0.9, and x+y+z=1.

Specifically, the composite transition metal hydroxide precursor may include a compound represented by the following Chemical Formula 4.

[Chemical Formula 4] [(NiₓMn_{y}M1_{z})](OH)₂

In Chemical Formula 4, M1 is Fe, 0.27≤x≤0.37, 0.27≤y≤0.37, 0.27≤z≤0.37, and x+y+z=1.

The positive electrode active material preparation step is for diffusing the first doping element co-precipitated or coated on the surface and inside of the precursor particles into the interior of the particles, uniformly doping the second doping element into the surface and interior of the oxide particles, substituting the first and second doping elements into the crystal structure of the sodium composite transition metal oxide, and inserting sodium to prepare the sodium composite transition metal oxide. In the positive electrode active material preparation step, the transition metal hydroxide precursor coated or co-precipitated with the first doping element (copper), a compound of the second doping element, and a sodium compound are mixed and heat-treated.

In one embodiment, the mixing may include mixing the transition metal hydroxide precursor coated with the first doping element and the compound of the second doping element such that the second doping element is present in an amount of 0.5 to 2 mol% based on 100 mol% of the total metals, for example, 0.5 to 1.5 mol% or 0.5 to 1 mol%.

Further, the sodium compound may be mixed such that Na/M (total metals excluding Na and Ca) is greater than 0.8 equivalents and less than 1.2 equivalents, for example, 0.9 to 1.1 equivalents.

In one embodiment, by applying a dry process, the mixing may provide a uniform composition of the first doping element, the second doping element, and sodium on at least a portion of the surface of the precursor particles, preferably on the entire surface thereof. In contrast, when a wet process is employed, selection of the second doping element compound and the sodium compound may be limited, and process costs may increase due to process complexity. However, the present invention is not limited thereto.

In one embodiment, the second doping element compound may be an acetate compound, sulfide, nitride, phosphide, oxide, oxyhydroxide, hydroxide, or a combination thereof of the second doping element. The second doping element may be zinc (Zn) or zirconium (Zr), and preferably zinc (Zn).

Further, the sodium compound may be at least one selected from the group consisting of Na₂CO₃, NaOH, NaNO₃, CH₃COONa, and Na₂(COO)₂, and preferably Na₂CO₃, NaOH, or a combination thereof.

In one embodiment, the heat treatment may be performed at a temperature of 800 to 1,000°C for 8 to 12 hours. When the heat-treatment temperature and time are within the above ranges, the first doping element may be uniformly diffused into the oxide particles, the first and second doping elements may be uniformly distributed among a plurality of single-crystal particles, the reaction among the raw materials may proceed sufficiently, and the single-crystal particles may grow uniformly.

Specifically, the heat treatment may be performed at a temperature of 800 to 1,000°C, 850 to 950°C, or 900 to 950°C for 8 to 12 hours, 8.5 to 11.5 hours, or 9 to 11 hours, thereby further improving the above-described effects.

Subsequently, the method may further include washing the positive electrode active material prepared in the doping process with water. The washing process is performed to remove unreacted materials, impurities, and residual sodium. Specifically, the positive electrode active material prepared in the calcination process may be introduced into a reactor containing one or more selected from deionized water, distilled water, and ethanol, and washed at a temperature of 1 to 80°C or 5 to 50°C with a stirring speed of 200 to 500 rpm, 200 to 400 rpm, or 300 to 400 rpm for 0.5 to 5 hours, 0.5 to 4 hours, 0.5 to 3 hours, or 0.5 to 1.5 hours. However, the present invention is not limited thereto.

Further, a drying process may be performed to remove moisture from the positive electrode active material containing moisture after the washing process. The drying process may be performed under vacuum conditions at a temperature of 100 to 300°C for 12 hours or longer. However, the present invention is not limited thereto.

Another embodiment of the present invention provides a positive electrode for a sodium secondary battery including the positive electrode active material described above, and a sodium secondary battery including the same.

The positive electrode may include a positive electrode current collector and a positive electrode active material layer disposed on the positive electrode current collector, and the positive electrode active material according to one aspect of the present invention may be present in the positive electrode active material layer.

The positive electrode current collector is not particularly limited so long as it has conductivity without causing a chemical change in the battery. For example, stainless steel, aluminum, nickel, titanium, calcined carbon, or aluminum or stainless steel surface-treated with carbon, nickel, titanium, silver, or the like may be used. Further, the positive electrode current collector may generally have a thickness of 3 to 500 µm, and fine surface irregularities may be formed on the surface thereof to improve adhesion of the positive electrode active material. The positive electrode current collector may be provided in various forms such as a film, sheet, foil, net, porous body, foam, or nonwoven fabric.

Further, the positive electrode active material layer may be a layer including the above-described positive electrode active material together with a conductive material and a binder.

Here, the conductive material is used to impart conductivity to the electrode, and any material may be used without particular limitation so long as it has conductivity without causing a chemical change in the positive electrode active material. Non-limiting examples of the conductive material include graphite, such as natural graphite or artificial graphite; carbon-based materials, such as carbon black, acetylene black, Ketjen black, channel black, furnace black, lamp black, thermal black, and carbon fibers; metal powders or metal fibers, such as copper, nickel, aluminum, and silver; conductive whiskers, such as zinc oxide and potassium titanate; conductive metal oxides, such as titanium oxide; and conductive polymers, such as polyphenylene derivatives. The conductive material may generally be included in an amount of 1 wt% to 30 wt% based on the total weight of the positive electrode active material layer.

Further, the binder is a material that serves to improve adhesion between positive electrode active material particles and adhesion between the positive electrode active material and the current collector. Non-limiting examples of the binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber (SBR), fluororubber, and various copolymers thereof. The binder may generally be included in an amount of 1 wt% to 30 wt% based on the total weight of the positive electrode active material layer.

The positive electrode according to one embodiment of the present invention may be prepared according to a conventional method for preparing a positive electrode for a sodium secondary battery, except that the positive electrode active material described above is used. For example, the positive electrode may be prepared by coating a slurry for forming a positive electrode active material layer, including the positive electrode active material and optionally a binder and a conductive material, onto a positive electrode current collector, followed by drying and rolling. According to another example, the positive electrode may be prepared by casting the slurry for forming a positive electrode active material layer onto a separate support, peeling the resulting positive electrode active material layer from the support to obtain a film, and laminating the film onto a positive electrode current collector.

According to another aspect of the present invention, there is provided an electrochemical device including the positive electrode described above. Here, the electrochemical device may specifically be a battery, a capacitor, or the like, and more specifically may be a sodium secondary battery.

The sodium secondary battery includes a positive electrode, a negative electrode disposed opposite to the positive electrode, a separator interposed between the positive electrode and the negative electrode, and an electrolyte (electrolyte solution). In addition, the sodium secondary battery may include a battery case accommodating an electrode assembly including the positive electrode, the negative electrode, and the separator, and a sealing member for sealing the battery case.

In this case, depending on the shape of the battery case, the sodium secondary battery may be classified into a can-type sodium secondary battery in which the electrode assembly is accommodated in a metal can, and a pouch-type sodium secondary battery in which the electrode assembly is accommodated in a pouch formed of a sheet such as an aluminum laminate.

In particular, in the case of a pouch-type sodium secondary battery including a positive electrode comprising the positive electrode active material according to various embodiments of the present invention, there is an advantage in that side reactions between the positive electrode active material and the electrolyte are less likely to occur, thereby improving stability during storage and/or operation and simultaneously reducing gas generation.

The present invention will be described in further detail with reference to the following Examples. However, these Examples are provided only for a more detailed description of the present invention, and the scope of the present invention is not limited by the following Examples.

### Example

### (Example 1)

An aqueous solution of a first doping element compound (CuSO₄) corresponding to 11 mol% (Cu/M, wherein M=Ni+Fe+Mn) and an aqueous solution of a second doping element compound (ZnSO₄) corresponding to 0.5 mol% (Zn/M) were added for 1 hour to a slurry of a Ni_{0.33}Fe_{0.33}Mn_{0.33} (OH)₂ precursor and DIW at a weight ratio of 1:1. At this time, a 25 wt% aqueous NaOH solution was additionally introduced to maintain the slurry at pH 10, thereby preparing Ni_{0.22}Fe_{0.33}Mn_{0.33}Cu_{0.11}Zn_{0.005}(OH)₂.

The Ni_{0.22}Fe_{0.33}Mn_{0.33}Cu_{0.11}Zn_{0.005}(OH)₂ precursor and Na₂CO₃ were mixed such that Na/M (M=Ni+Fe+Mn)=1.0 equivalent, and heat-treated at 900°C for 10 hours in an air atmosphere to prepare a positive electrode active material powder, Na[(Ni_{0.22}Fe_{0.33}Mn_{0.33}Cu_{0.11}Zn_{0.005})]O₂.

A positive electrode slurry was prepared by dispersing 85 wt% of the prepared positive electrode active material, 10 wt% carbon black, and 5 wt% PVdF binder in 30 g of N-methyl-2-pyrrolidone (NMP). The positive electrode slurry was uniformly coated onto an aluminum foil having a thickness of 15 µm and vacuum-dried at 135°C to prepare a positive electrode for a sodium secondary battery.

A sodium secondary battery (coin cell) was prepared using the positive electrode, a sodium metal plate as a counter electrode, porous glass fiber (thickness: 200 µm) as a separator, and an electrolyte in which NaPF₆ was present at a concentration of 1.0 M in a solvent mixed at a volume ratio of 98:2 of propylene carbonate and fluoroethylene carbonate.

### (Example 2)

Ni_{0.33}Fe_{0.33}Mn_{0.33}(OH)₂ and CuSO₄ were mixed using a hand mixer in an amount corresponding to Cu/M (M=Ni+Fe+Mn) of 0.11 equivalent, and heat-treated at 600°C for 6 hours in an air atmosphere to coat Cu on the surface of the precursor.

The Cu-coated Ni_{0.33}Fe_{0.33}Mn_{0.33}(OH)₂ precursor and Na₂CO₃ were added such that Na/M (M=Ni+Fe+Mn)=1.0 equivalent, Zn(OH)₂ was added such that Zn/M (M=Ni+Fe+Mn)=0.005 equivalent, and the mixture was heat-treated at 900°C for 10 hours in an air atmosphere to prepare a positive electrode active material powder, Na[(Ni_{0.22}Fe_{0.33}Mn_{0.33}Cu_{0.11}Zn_{0.005})]O₂.

Thereafter, a positive electrode and a sodium secondary battery were prepared in the same manner as in Example 1, except that the prepared positive electrode active material was used.

### (Examples 3 to 6)

Positive electrode active materials, positive electrodes, and sodium secondary batteries were prepared in the same manner as in Example 1, except that the compositions of the first and second doping element compounds were changed as shown in Table 2 below.

### (Comparative Example 1)

Ni_{0.33}Fe_{0.33}Mn_{0.33}(OH)₂ and CuSO₄ were mixed using a hand mixer in an amount corresponding to Cu/M (M=Ni+Fe+Mn) of 0.11 equivalent, Na₂CO₃ was added such that Na/M (M=Ni+Fe+Mn)=1.0 equivalent, Zn(OH)₂ was added such that Zn/M (M=Ni+Fe+Mn)=0.005 equivalent, and the mixture was heat-treated at 900°C for 10 hours in an air atmosphere to prepare a positive electrode active material powder, Na[(Ni_{0.22}Fe_{0.33}Mn_{0.33}Cu_{0.11}Zn_{0.005})]O₂.

Thereafter, a positive electrode and a sodium secondary battery were prepared in the same manner as in Example 1, except that the prepared positive electrode active material was used.

### (Comparative Example 2)

A Zn coating was formed on the surface of the precursor by mixing Ni_{0.33}Fe_{0.33}Mn_{0.33}(OH)₂ and Zn(OH)₂ using a hand mixer in an amount corresponding to Zn/M (M=Ni+Fe+Mn)=0.005 equivalent and heat-treating the mixture at 600°C for 6 hours in an air atmosphere. Thereafter, Na₂CO₃ was added to the Zn-coated Ni_{0.33}Fe_{0.33}Mn_{0.33}(OH)₂ precursor such that Na/M (M=Ni+Fe+Mn)=1.0 equivalent, CuSO₄ was added in an amount corresponding to Cu/M (M=Ni+Fe+Mn) of 0.11 equivalent, and the mixture was heat-treated at 900°C for 10 hours in an air atmosphere to prepare a positive electrode active material powder, Na[(Ni_{0.22}Fe_{0.33}Mn_{0.33}Cu_{0.11}Zn_{0.005})]O₂. Thereafter, positive electrode active materials, positive electrodes, and sodium secondary batteries were prepared in the same manner as in Example 1.

### (Comparative Example 3)

Positive electrode active material powder Na[(Ni_{0.33}Fe_{0.33}Mn_{0.33})]O₂, a positive electrode, and a sodium secondary battery were prepared in the same manner as in Example 1, except that the coating process was not performed and CuSO₄ and Zn(OH)₂ were not used.

### Experimental Example

**Experimental Example 1:** Confirmation of Cu Distribution Uniformity in Positive Electrode Active Material According to Cu Coating (Impregnation) Method on Transition Metal Precursor Surface

FIGS. 1 and 2 are cross-sectional SEM-EDS Cu analysis images (FIG. 1) of transition metal precursors prepared during the hydroxide precursor preparation step of Comparative Example 1 and Examples 1 and 2, and cross-sectional SEM-EDS Cu and Zn analysis images (FIG. 2) of the prepared positive electrode active material particles.

Referring to FIG. 1, it was confirmed that, when the precursor was prepared such that Cu was simultaneously present in the core and on the surface of the transition metal precursor as in Examples 1 and 2, Cu diffused into the interior and was uniformly distributed during preparation of the positive electrode active material.

In contrast, when Cu and Zn were simultaneously doped during preparation of the positive electrode active material as in Comparative Example 1, Cu was agglomerated, and thus structural stability was lowered and cycle-life characteristics were expected to deteriorate.

### Experimental Example 2: Analysis of Distribution Uniformity of Dopant Cu in the Crystal Structure of the Positive Electrode Active Material

For a cross-section passing through the center portion of the positive electrode active material prepared in Example 1, the average value (A) and standard deviation (B) of the content (atomic mol%) of the total metals excluding sodium were calculated by SEM-EDS line-mapping at at least thirty arbitrary points, and the results are shown in FIG. 3.

As shown in FIG. 3, on a cross-sectional line passing through the center portion of the particle, the average Cu concentration was calculated to be 10.8 atomic mol%, the standard deviation was 1.2, and the ratio (B/A) of the standard deviation (B) to the average value (A) was calculated to be 0.110.

For ten arbitrarily selected positive electrode active material particles, the same SEM-EDS line-mapping analysis was performed, and the average of the ten average values and the average of the ten standard deviations were calculated and are shown in Table 1 below.

**[Table 1]**

| | Ni | Cu | Fe | Mn |
|---|---|---|---|---|
| Average value (A) (at mol%) | 23.9 | 11.1 | 32.2 | 33.6 |
| Standard deviation (B) | 1.5 | 1.4 | 0.4 | 1.6 |
| B/A | 0.063 | 0.126 | 0.012 | 0.048 |

Additionally, with respect to the positive electrode active materials prepared in Examples 3 to 6 and Comparative Examples 1 to 2, the average value (A) and standard deviation (B) of the Cu content (atomic mol%) were obtained through the same SEM-EDS line-mapping analysis as described above, and are summarized in Table 2 below.

**[Table 2]**

| | Unit of dopant usage: molar ratio (Cu or Zn)/(M=Ni+Fe+Mn) | | Distribution Uniformity of Cu Content (atomic mol%) Within "a Single-Crystal Particle" | | |
|---|---|---|---|---|---|
| | 1^{st} Dopant Cu(OH)₂ | 2^{nd} Dopant Zn(OH)₂ | Average Value (A) | Standard Deviation (B) | B/A |
| Example 3 | 0.03 | 0.005 | 2.8 | 0.4 | 0.143 |
| Example 4 | 0.07 | 0.005 | 7.2 | 0.9 | 0.125 |
| Example 1 | 0.11 | 0.005 | 11.1 | 1.4 | 0.126 |
| Example 5 | 0.11 | 0.01 | 10.9 | 1.5 | 0.138 |
| Example 6 | 0.11 | 0.015 | 11.1 | 1.5 | 0.135 |
| Comparati ve Example 1 | 0.11 | 0.005 | 8.6 | 4.9 | 0.569 |
| Comparati ve Example 2 | 0.11 | 0.005 | 7.5 | 4.1 | 0.547 |

Referring to Table 2 and FIG. 3, it was confirmed that Example 1 exhibited the most excellent B/A value of 0.126 and that Cu was uniformly distributed within the single-crystal particles of the single-crystal positive electrode active material. In contrast, in Comparative Examples 1 and 2, Cu was severely agglomerated and exhibited a non-uniform distribution.

In Examples 1 and 3 to 6, as the Cu doping amount increased, the degree of large-particle single crystallization increased. However, when the ratio of the Cu doping amount to the Zn doping amount excessively decreased (Examples 3, 5, and 6), B/A also increased, indicating deterioration in the distribution uniformity of Cu. In addition, since substantially the same level of single crystallization proceeded regardless of the Zn content within the Zn doping range of 0.5 to 2.0 mol%, a Zn doping amount of 0.5 mol% was determined to be preferable in terms of capacity characteristics.

Taken together, it was experimentally confirmed that an optimal doping composition was achieved at 7 to 11 mol% Cu and 0.5 mol% Zn.

Further, in order to confirm the distribution uniformity of the first dopant element (Cu) among a plurality of single-crystal particles, the average value (C) and standard deviation (D) of the Cu content (atomic mol%) among ten arbitrarily selected single-crystal particles were calculated through cross-sectional EDS line-mapping analysis, and the results are summarized in Table 3 below.

In the above analysis, as shown in FIG. 4, the Cu content corresponding to the area indicated by a circle in the SEM image of the cross-section of each single-crystal particle was analyzed by EDS line-mapping.

**[Table 3]**

| | Unit of dopant usage: molar ratio (Cu or Zn)/(M=Ni+Fe+Mn) | | Distribution Uniformity of Cu Content (atomic mol%) Among "Ten Arbitrarily Selected Single-Crystal Particles" | | |
|---|---|---|---|---|---|
| | 1^{st} Dopant Cu(OH)₂ | 2^{nd} Dopant Zn(OH)₂ | Average Value (C) | Standard Deviation (D) | D/C |
| Example 3 | 0.03 | 0.005 | 3.2 | 0.21 | 0.066 |
| Example 4 | 0.07 | 0.005 | 6.8 | 0.5 | 0.074 |
| Example 1 | 0.11 | 0.005 | 11.5 | 0.8 | 0.070 |
| Example 5 | 0.11 | 0.01 | 11.2 | 1.0 | 0.089 |
| Example 6 | 0.11 | 0.015 | 11.3 | 0.9 | 0.080 |
| Comparativ e Example 1 | 0.11 | 0.005 | 10.9 | 2.9 | 0.266 |
| Comparativ e Example 2 | 0.11 | 0.005 | 11.1 | 3.6 | 0.324 |

Referring to Table 3, it was confirmed that Examples 1, 3, and 4 exhibited excellent D/C values of 0.066 to 0.074 and that Cu was uniformly distributed among the plurality of single-crystal particles. In contrast, in Comparative Examples 1 and 2, Cu was severely agglomerated and exhibited a non-uniform distribution.

Meanwhile, as the Zn doping amount increased, the doping uniformity of Cu tended to decrease slightly.

### Experimental Example 3: Confirmation of Formation of CuO Impurity Phase

The content of the CuO impurity phase in the positive electrode active materials prepared in Example 1, Examples 3 to 6, and Comparative Examples 1 to 2 was analyzed through X-ray diffraction (XRD) and Rietveld refinement analysis (XRD = Rigaku D/MAX-2500/PC, 40 kV, 15 mA, 4°/min, Cu-Kα radiation, λ = 0.1540 nm).

Specifically, the average value of the CuO content (wt%) of ten arbitrarily selected single-crystal particles among the positive electrode active materials prepared in each Example and Comparative Example was calculated and is shown in Table 4 below.

**[Table 4]**

| | CuO Phase Content (wt%) (Average of Ten Arbitrarily Selected Single-Crystal Particles) |
|---|---|
| Example 1 | 2.4 |
| Example 3 | 2.2 |
| Example 4 | 2.8 |
| Example 5 | 2.3 |
| Example 6 | 2.3 |
| Comparative Example 1 | 5.2 |
| Comparative Example 2 | 4.8 |

Referring to Table 4, it was confirmed that formation of the CuO impurity phase was suppressed to less than 3 wt% in the Examples. In contrast, in Comparative Examples 1 and 2, it was analyzed that a CuO phase was formed in the interior and on the surface of particles where Cu was agglomerated.

### Experimental Example 4: Analysis of Positive Electrode Active Material Particle Cracking During Electrode Rolling

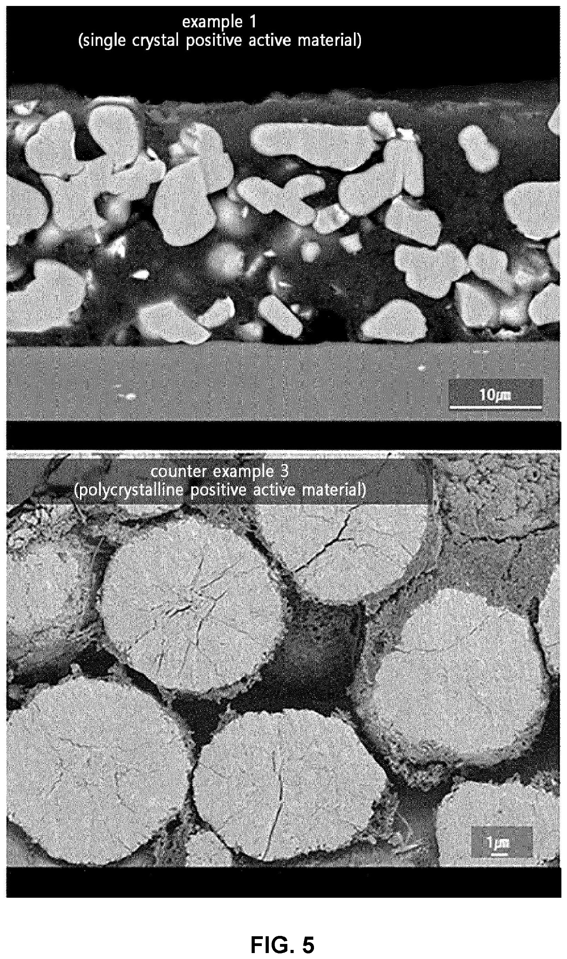

FIG. 5 is a cross-sectional SEM image of the positive electrodes prepared after rolling in Example 1 and Comparative Example 3.

Referring to FIG. 5, in Comparative Example 3, particle cracking was observed during electrode rolling in the case of the polycrystalline positive electrode active material that was not doped with Cu and Zn.

In Example 1, in which particle cracking did not occur, it was confirmed that the strength of the single-crystal positive electrode active material particles was improved.

### Experimental Example 5: Evaluation of Sodium Secondary Battery Performance

For the sodium secondary batteries prepared in Example 1, Examples 3 to 6, and Comparative Examples 1 to 3, the first charge capacity, first discharge capacity, and first coulombic efficiency were measured through charge-discharge testing using an electrochemical analyzer (Toyo, Toscat-3100) under conditions of 25°C, a voltage range of 2.2 V to 4.0 V, and 0.1 C/0.1 C.

In addition, with respect to the same sodium secondary batteries, charge-discharge cycling was performed 50 times under conditions of 1 C/1 C within an operating voltage range of 2.2 V to 4.0 V at 25°C, and the ratio of the discharge capacity at the 50th cycle to the initial discharge capacity (cycle capacity retention) was measured. The results are shown in Table 5 below.

**[Table 5]**

| | Initial Charge Capacity (mAh/g) | Initial Discharge Capacity (mAh/g) | Cycle-Life Characteristic (50 cy, %) |
|---|---|---|---|
| Example 1 | 142.1 | 130.5 | 86 |
| Example 3 | 143.2 | 134.1 | 81 |
| Example 4 | 144.0 | 133.8 | 84 |
| Example 5 | 141.9 | 131.3 | 86 |
| Example 6 | 141.1 | 130.9 | 85 |
| Comparative Example 1 | 141.2 | 128.5 | 69 |
| Comparative Example 2 | 140.8 | 130.1 | 72 |

Referring to Table 5, in Example 1 and Examples 3 to 6, Cu and Zn were uniformly doped into the surface and interior of the positive electrode active material particles, and large-particle single crystallization was efficiently achieved. As a result, it was confirmed that the initial capacity characteristics and cycle-life characteristics were improved as compared with Comparative Examples 1 and 2.

## Claims

1. A positive electrode active material for a sodium secondary battery, comprising:
a single-crystal sodium composite transition metal oxide comprising at least sodium; two or more principal elements selected from transition metals; and two or more doping elements selected from transition metals,
wherein the positive electrode active material satisfies the following Relation Formula 1 representing compositional uniformity of a first doping element: $B / A \leq 0.15$
(wherein, in Relation Formula 1, A and B are measured at at least thirty arbitrary points on a cross-section passing through a center portion of the positive electrode active material, and are an average value (A) and a standard deviation (B), respectively, of a content (wt%) of the first doping element based on total metals excluding sodium)

2. The positive electrode active material for a sodium secondary battery according to claim 1,
wherein the positive electrode active material satisfies the following Relation Formula 2 representing distribution uniformity of the first doping element among a plurality of single-crystal particles of the sodium composite transition metal oxide: $D / C \leq 0.10$
(wherein, in Relation Formula 2, C and D are measured among at least ten arbitrarily selected single-crystal particles, and are an average value (C) and a standard deviation (D), respectively, of a content (wt%) of the first doping element based on total metals excluding sodium)

3. The positive electrode active material for a sodium secondary battery according to claim 1,
wherein the positive electrode active material comprises less than 3 wt% of an oxide of the first doping element.

4. The positive electrode active material for a sodium secondary battery according to claim 1,
wherein the single-crystal sodium composite transition metal oxide has an O3-type crystal structure,
wherein the transition metals comprise Ni; Mn; and at least one selected from Fe and Co; and
wherein, among the two or more doping elements selected from transition metals, the first doping metal is Cu and the second doping metal is Zn or Zr.

5. The positive electrode active material for a sodium secondary battery according to claim 1,
wherein the sodium composite transition metal oxide comprises a compound represented by the following Chemical Formula 1:
[Chemical Formula 1] Naₐ[(NiₓMn_{y}Fe_{z}Cu_{b}M1_{c})]O₂
wherein, in Chemical Formula 1,
M1 is Zn or Zr,
0.8<a<1.2, 0.1≤x≤0.9, 0.1≤y≤0.9, 0.1≤z≤0.9, 0.05≤b≤0.13, 0.005≤c≤0.02, and x+y+z+b+c=1.

6. The positive electrode active material for a sodium secondary battery according to claim 1,
wherein the sodium composite transition metal oxide comprises a compound represented by the following Chemical Formula 2:
[Chemical Formula 2] Naₐ[(NiₓMn_{y}Fe_{z}Cu_{b}M1_{c})]O₂
wherein, in Chemical Formula 2,
M1 is Zn,
0.9<a<1.1, 0.16≤x≤0.26, 0.27≤y≤0.37, 0.27≤z≤0.37, 0.05≤b≤0.13, 0.005≤c≤0.02, 0.27≤x+b≤0.37, and x+y+z+b+c=1.

7. The positive electrode active material for a sodium secondary battery according to claim 1,
wherein the sodium composite transition metal oxide is **characterized in that** a ratio of a content of the first doping element to a content of the second doping element is from 10 to 25 on a molar basis.

8. A method of preparing a positive electrode active material for a sodium secondary battery, comprising:
a precursor preparation step of preparing a precursor comprising a first doping element and at least two transition metals; and
a positive electrode active material preparation step of mixing the precursor and a sodium compound and heat-treating the mixture to uniformly dope a surface and an interior of positive electrode active material particles with the first doping element,
wherein the precursor preparation step or the positive electrode active material preparation step further comprises mixing a compound of a second doping element.

9. The method of preparing a positive electrode active material for a sodium secondary battery according to claim 8,
wherein the precursor preparation step comprises mixing at least two transition metal compounds and a compound of the first doping element, and then preparing a transition metal hydroxide precursor through a co-precipitation reaction.

10. The method of preparing a positive electrode active material for a sodium secondary battery according to claim 8,
wherein the precursor preparation step comprises mixing a transition metal hydroxide precursor and a compound of the first doping element, and then heat-treating the mixture to coat at least a portion of a surface of the transition metal hydroxide precursor with the first doping element.

11. A positive electrode for a sodium secondary battery, comprising the positive electrode active material according to claim 1.

12. A sodium secondary battery comprising the positive electrode according to claim 11.
